# EUROPÄISCHE PATENTSCHRIFT

(11) **EP 3 546 259 B1**
(45) Veröffentlichungstag und Bekanntmachung des Hinweises auf die Patenterteilung: **03.06.2020**
(21) Anmeldenummer: 19169405.8
(22) Anmeldetag: 06.07.2016
(51) Int. Cl.: B60J 3/04, B60K 35/00, G06F 3/01, G09G 3/20, G06F 3/0488, G06F 3/0484, B60J 1/20

(54) **VERFAHREN ZUM BETREIBEN EINES INTERAKTIVEN SICHTSCHUTZES, EINE SCHEIBENEINRICHTUNG SOWIE EIN KRAFTFAHRZEUG**
METHOD FOR OPERATING AN INTERACTIVE SCREENING MEANS, A WINDOW ASSEMBLY, AND A MOTOR VEHICLE
PROCEDE DE FONCTIONNEMENT D'UN PARA-SOLEIL INTERACTIF, UN ENSEMBLE DE VITRES ET UN VEHICULE AUTOMOBILE

(43) Veröffentlichungstag der Anmeldung: 02.10.2019
(62) Teilanmeldung aus: 16178172.9
(73) Patentinhaber: Audi AG, 85045 Ingolstadt (DE)
(72) Erfinder: Mertens, Joris, 85051 Ingolstadt (DE); Haslinger, Georg, 85053 Ingolstadt (DE); Hélot, Jacques, 85051 Ingolstadt (DE); Klug, Markus, 85057 Ingolstadt (DE)

(56) Entgegenhaltungen:
- EP-A1- 2 857 239
- EP-A2- 3 006 239
- WO-A1-2015/098312

## Beschreibung

Die Erfindung betrifft ein Verfahren zum Betreiben eines interaktiven Sichtschutzes an einer transparenten Scheibe einer Scheibeneinrichtung. Zu der Erfindung gehört auch eine Scheibeneinrichtung, die gemäß dem erfindungsgemäßen Verfahren betreibbar ist. Schließlich umfasst die Erfindung auch ein Kraftfahrzeug mit der erfindungsgemäßen Scheibeneinrichtung.

In Kraftfahrzeugen werden heutzutage als Sichtschutz Rollos eingesetzt. Bei den Rollos handelt es sich beispielsweise um eine abrollbare Stoffbahn, welche an einer Fensterscheibe in einem Kraftfahrzeug angeordnet ist. Wird ein Fahrer oder ein Beifahrer im Kraftfahrzeug geblendet, so kann er das Rollo betätigen, indem er die Stoffbahn über die Fensterscheibe zieht. Ein Nachteil eines solchen Sichtschutzes besteht darin, dass eine Fixierung des abgerollten Rollos notwendig ist, damit das Rollo in dem ausgerollten Zustand verbleibt. Durch die notwendige Fixierung des Rollos ist auch nur eine Stellposition des Rollos einstellbar, nämlich die, in der das Rollo vollständig über die Fensterscheibe gezogen ist. Zudem wird bei einem ausgerollten Rollo die Fensterscheibe nicht vollständig durch die Stoffbahn abgedunkelt, was weiterhin zu einem für den Fahrer oder Beifahrer störenden Lichteinfall am Rollo vorbei führt.

In der EP 3 006 239 A2 ist eine Fensteranzeigevorrichtung beschrieben. Die Fensteranzeigevorrichtung umfasst eine in einer transparenten Fensterscheibe eines Fahrzeugs vorgesehene Anzeigeeinrichtung, eine Betätigungseinrichtung, die zum Erfassen einer Aktion zum Betätigen der Anzeigeeinrichtung eingerichtet ist, und eine Steuereinrichtung, die dazu eingerichtet ist, einen Sonnenschutz auf der Anzeigeeinrichtung anzuzeigen. Der Sonnenschutz ist bewegbar, um an der Anzeigeeinrichtung selektiv den angezeigten Sonnenschutz zu öffnen und zu schließen, basierend auf einer Aktion, die an der Anzeigeeinrichtung durchgeführt wird.

Aus der WO 2015/098312 A1 geht eine Dimm-Steuerungsvorrichtung hervor. Die Dimm-Steuerungsvorrichtung umfasst einen Transmissionsgrad-Änderungs-Teil, welcher auf einer Windschutzscheibe eines Fahrzeugs bereitgestellt ist und eingerichtet ist, einen Lichttransmissionsgrad der Windschutzscheibe zu verändern, einen Detektor, welcher eingerichtet ist, eine Position einer Kontaktbetätigung an der Windschutzscheibe durch einen Verwender zu erfassen und einen Dimm-Steuerungsteil, welcher eingerichtet ist, den Transmissionsgrad nach der Kontaktbetätigung an einer Detektionsfläche des Detektors zu verändern, unter der Bedingung, dass der Detektor eine Kontaktbetätigung an einem Steuerungs-Anfangs-Bereich/Regelungs-Anfangs-Bereich erfasst hat, welcher innerhalb der Detektionsfläche liegt.

In der EP 2 857 239 A1 ist ein Sonnenschutzsystem beschrieben, das eine Steuereinheit und einen Sonnenschutz mit einer ersten nichtplanaren Glasschicht und einer nichtplanaren Anzeigeschicht mit einer ersten Seite und einer gegenüberliegenden zweiten Seite aufweist. Die erste Seite haftet an der Glasschicht, wobei die Anzeigeschicht eine Vielzahl von Anzeigeteilbereichen umfasst, die die Gesamtfläche der Anzeigeschicht abdecken. Jeder einzelne Anzeigeteilbereich kann von der Steuereinheit gesteuert werden, um die Transmission des Teilbereichs zu ändern.

Aufgabe der vorliegenden Erfindung ist es daher, einen besonders zuverlässigen und flexibel einstellbaren Sichtschutz bereitzustellen.

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung sowie die Figuren offenbart.

Erfindungsgemäß wird diese Aufgabe gelöst durch ein Verfahren zum Betreiben eines interaktiven Sichtschutzes an einer transparenten Scheibe einer Scheibeneinrichtung. Der Sichtschutz wird mittels einer Anzeigeeinheit der Scheibeneinrichtung an der Scheibe durch pixelweises Einblenden opaker Bildpunkte erzeugt. Dabei bilden die Bildpunkte eine zusammenhängende Sichtschutzfläche. Bei dem Verfahren wird mittels einer Erfassungseinrichtung zunächst eine Bedienhandlung eines Nutzers erfasst, welche eine Auswahl eines Stellbereiches und eine Bewegung relativ zu der Scheibe umfasst. Anschließend wird eine Ausdehnung der Sichtschutzfläche an dem Stellbereich in Abhängigkeit von der erfassten Bewegung mittels einer Steuereinrichtung eingestellt.

Durch das Verfahren kann der Nutzer mit dem Sichtschutz interagieren. Der Sichtschutz erstreckt sich über oder bedeckt dabei zunächst zumindest teilweise, also ganz oder teilweise, die transparente Scheibe. Zur Bereitstellung des Sichtschutzes werden mittels der Anzeigeeinheit pixelweise opake Bildpunkte eingeblendet. Mit anderen Worten werden durch die Anzeigeeinheit lichtundurchlässige oder undurchsichtige Pixel eingeblendet, welche zusammen die lichtundurchlässige oder undurchsichtige Sichtschutzfläche des Sichtschutzes bilden oder ausbilden. Damit der Sichtschutz die Scheibe zumindest teilweise überdeckt oder bedeckt, kann der Nutzer beispielsweise zunächst eine Aktivierungsgeste ausführen, welche durch die Erfassungseinrichtung erfasst wird. Wird die Aktivierungsgeste durch die Erfassungseinrichtung erfasst, übermittelt diese ein Erfassungssignal an die Steuereinrichtung, welche daraufhin die Anzeigeeinheit ansteuern kann, indem die Steuereinrichtung beispielsweise ein Steuersignal an die Anzeigeeinheit übermittelt. Durch eine Ansteuerung der Anzeigeeinheit blendet diese die opaken Bildpunkte ein, um eine zusammenhängende Sichtschutzfläche bereitzustellen.

Ist die Sichtschutzfläche bereitgestellt, kann der Nutzer anschließend die Ausdehnung der Sichtschutzfläche des Sichtschutzes an dem durch den Nutzer ausgewählten Stellbereich einstellen. Mit "Ausdehnung" ist hier bevorzugt eine Erstreckung der Sichtschutzfläche an oder in der Scheibe gemeint, das heißt die Flächengröße der Sichtschutzfläche.

Durch die Ausbildung einer zusammenhängenden Sichtschutzfläche wird auf besonders zuverlässige Art und Weise eine Abdeckung oder Abdunkelung der Scheibe bewirkt. Indem der Nutzer durch die Ausführung einer Bedienhandlung die Ausdehnung der Sichtschutzfläche einstellen kann, kann der Nutzer die Sichtschutzfläche nach seinen Bedürfnissen anpassen.

Zu der Erfindung gehören optionale Weiterbildungen, durch deren Merkmale sich zusätzliche Vorteile ergeben.

Erfindungsgemäß wird beim Einstellen der Ausdehnung an dem Stellbereich zumindest ein vorbestimmter Bereich der Sichtschutzfläche in Abhängigkeit von der Bewegung geöffnet und dadurch die opaken Bildpunkte ausgeblendet. Insbesondere wird der zumindest eine vorbestimmte Bereich durch die restliche Sichtschutzfläche zumindest teilweise, also teilweise oder vollständig, umgeben. Durch die erfasste Bewegung wird bevorzugt der zumindest eine vorbestimmte Bereich innerhalb der Sichtschutzfläche geöffnet, wodurch in dem zumindest einen vorbestimmten Bereich die Scheibe frei gelegt oder freigegeben wird. Mit anderen Worten wird durch die Bewegung bevorzugt der zumindest eine vorbestimmte Bereich der Sichtschutzfläche entfernt oder an dem zumindest einen vorbestimmten Bereich Bildpunkte der Anzeigeeinheit derart angesteuert, dass die opaken Bildpunkte nicht eingeblendet werden. Mit anderen Worten wird in der Sichtschutzfläche bevorzugt zumindest ein Guckloch oder Loch oder Sichtfenster bereitgestellt. Die restliche Sichtschutzfläche umgibt oder umrandet den zumindest einen vorbestimmten Bereich. Ein Nutzer kann also durch den zumindest einen vorbestimmten Bereich wie durch ein Guckloch durch die Sichtschutzfläche und die transparente Scheibe hindurchschauen. Alternativ kann ein an einem unteren und/oder oberen und/oder seitlichen Rand der Sichtschutzfläche ein vorbestimmter Bereich geöffnet werden, welcher von einem Rahmen der Scheibe begrenzt ist. Dadurch kann die Sichtschutzfläche den zumindest einen vorbestimmten Bereich teilweise, also nicht vollständig, umgeben.

Dadurch ergibt sich der Vorteil, dass ein Nutzer nicht den gesamten Sichtschutz zu entfernen braucht, um durch die Scheibe sehen zu können. Wird die Scheibe beispielsweise in einem Kraftfahrzeug eingesetzt und fährt das Kraftfahrzeug, in dem Insassen oder Mitfahrer schlafen, nachts, so kann einer der Insasse, der wach ist und durch die Scheibe nach draußen schauen will, ohne die anderen zu stören, ein oder mehrere Gucklöcher in der Sichtschutzfläche der Scheibe machen.

Eine nicht beanspruchte Ausführungsform sieht vor, dass der zumindest eine vorbestimmte Bereich nach einer vorbestimmten Zeitspanne nach dem Ausführen der erfassten Bewegung automatisch geschlossen wird. Mit "schließen" ist hier bevorzugt gemeint, dass die Anzeigeeinheit bei dem zumindest einen vorbestimmten Bereich wieder opake Bildpunkte einblendet, sodass sich wieder eine zusammenhängende oder geschlossene Sichtschutzfläche bildet. Mit Zeitspanne ist hier bevorzugt ein Zeitintervall gemeint. Die Zeitspanne kann beispielsweise einem Timer der Steuereinrichtung hinterlegt sein. Beispielsweise kann sich der vorbestimmte Bereich nach dem Ausführen der erfassten Bewegung oder der erfassten Bedienhandlung nach einer vorbestimmten Zeitspanne von 5 bis 10 Sekunden wieder schließen.

Alternativ kann der Nutzer durch das Ausführen der Bewegung den zumindest einen vorbestimmten Bereich offen halten. Sobald der Nutzer dann die Bewegung beendet hat, kann sich der zumindest eine vorbestimmte Bereich sofort wieder schließen.

Durch das automatische Schließen des zumindest einen vorbestimmten Bereichs ergibt sich der Vorteil, dass die Interaktion mit dem Sichtschutz für den Nutzer vereinfacht wird. Dadurch hat der Nutzer keine weitere Bedienhandlung durchzuführen, um die gesamte Sichtschutzfläche wieder herzustellen.

In vorteilhafter Weise bleibt der zumindest eine vorbestimmte Bereich geöffnet, wenn nach dem Öffnen des zumindest einen vorbestimmten Bereichs eine Bestätigungshandlung des Nutzers mittels der Erfassungseinrichtung erfasst wird. Als Bestätigungshandlung kann der Nutzer beispielsweise mit einem Finger seiner Hand die Scheibe an dem zumindest einen vorbestimmten Bereich berühren oder antippen. Durch die Bestätigungshandlung wird der zumindest eine vorbestimmte Bereich fixiert. Damit dem Nutzer die Durchführung der Bestätigungshandlung angezeigt wird, kann die Anzeigeeinheit innerhalb des zumindest einen vorbestimmten Bereichs ein Icon, beispielsweise eine Stecknadel, einblenden oder anzeigen. Das Icon soll dem Nutzer visualisieren, dass das durch ihn generierte Guckloch - der zumindest eine vorbestimmte Bereich - fixiert ist, also an Ort und Stelle bleibt und/oder sich in seiner Ausdehnung nicht mehr verändert.

Erfindungsgemäß ist vorgesehen, dass nach dem Öffnen des zumindest einen vorbestimmten Bereichs eine Blickrichtung des Nutzers erfasst wird und in Abhängigkeit von der Blickrichtung der zumindest eine vorbestimmte Bereich innerhalb der Sichtschutzfläche bewegt wird. Die Blickrichtung des Nutzers kann beispielsweise durch die Erfassungseinrichtung der Scheibeneinrichtung erfasst werden. Beispielsweise kann die Erfassungseinrichtung zum Erfassen der Blickrichtung des Nutzers eine Kamera aufweisen. Es wird also beispielsweise durch den Nutzer der zumindest eine vorbestimmte Bereich geöffnet. Der vorbestimmte Bereich bleibt dann bevorzugt geöffnet. Nach dem Ausführen der Bedienhandlung zum Öffnen des zumindest einen vorbestimmten Bereichs kann eine Blickrichtung des Nutzers erfasst werden. Bevorzugt ist die Blickrichtung des Nutzers beim Öffnen des zumindest einen vorbestimmten Bereichs auf den Bereich der Scheibe, an dem der Nutzer die Sichtschutzfläche - dem Stellbereich - öffnen möchte, gerichtet. Erfasst die Erfassungseinrichtung anschließend eine Veränderung der Blickrichtung, beispielsweise weil der Nutzer einen anderen Punkt oder Bereich der Scheibe mit seinen Augen fixiert, so kann sich der zumindest eine vorbestimmte Bereich mit der Blickrichtung oder der Augenbewegung mitbewegen. Der Nutzer kann dadurch immer durch die Stelle oder den Bereich durch die Scheibe sehen, den er gerade mit seinen Augen oder seinem Blick fixiert. Dadurch ist der Sichtschutz besonders flexibel ausgestaltet.

Gemäß einer vorteilhaften Weiterbildung wird die Ausdehnung der Sichtschutzfläche bei einer Erfassung der Bedienhandlung an einem von außen zugänglichen Bereich der Scheibe erst nach einer Identifizierung des Nutzers eingestellt. Mit anderen Worten kann zur Einstellung der Ausdehnung der Sichtschutzfläche durch die Bedienhandlung an einem von außen zugänglichen Bereich der Scheibe eine Authentifizierung durchgeführt werden. Die Identifizierung des Nutzers kann beispielsweise durch die Erfassungseinrichtung erfolgen. Die Erfassungseinrichtung kann beispielsweise die Kamera umfassen, welche ferner dazu eingerichtet ist, den Nutzer zu erfassen. Mit anderen Worten kann die Erfassungseinrichtung kamerabasiert arbeiten und eine Gesichtserkennung durchführen. Zusätzlich oder alternativ kann die Erfassungseinrichtung dazu eingerichtet sein, ein tragbares mobiles Gerät des Nutzers, insbesondere ein Mobiltelefon und/oder eine elektrische Uhr, insbesondere eine Smartwatch, und/oder ein Tablet zu erfassen. Die Erfassungseinrichtung kann zusätzlich oder alternativ funkbasiert arbeiten. Beispielsweise kann die Erfassungseinrichtung eine digitale Kennung des elektronischen Geräts abfragen. Durch die Identifikation oder Identifizierung des Nutzers oder die Authentifizierung wird festgestellt, ob der Nutzer autorisiert oder berechtigt ist, die Bedienhandlung vorzunehmen. Dadurch ergibt sich der Vorteil, dass eine Sicherheit bei der Interaktion mit dem Sichtschutz bereitgestellt wird. Nur ein berechtigter Nutzer kann mit dem Sichtschutz interagieren.

Eine weitere vorteilhafte Ausführungsform der Erfindung sieht vor, dass als Bewegung zumindest eine erste Bediengeste erfasst wird, wobei bei der ersten Bediengeste zumindest zwei Finger einer Hand des Nutzers aus einer Startposition relativ zueinander bewegt werden. Zum Beispiel kann der Nutzer die zumindest zwei Finger voneinander wegbewegen. Beispielsweise können sich in der Startposition die Fingerkuppen der zwei Finger zunächst berühren. Anschließend kann der Nutzer die zwei Finger voneinander weg bewegen. Mit anderen Worten kann der Nutzer seine zwei Finger von der Startposition aus in entgegensetzte Richtungen bewegen. Alternativ kann der Nutzer die zumindest zwei Finger aus der Startposition auch aufeinander zubewegen. Dadurch kann der Nutzer den zumindest einen vorbestimmten Bereich wieder schließen oder verkleinern. Alternativ oder zusätzlich kann als Bewegung zumindest eine zweite Bediengeste erfasst werden, wobei bei der zweiten Bediengeste der Nutzer mit einer Hand oder zumindest einem Finger der Hand eine Wischbewegung oder Malbewegung an der Scheibe oder frei in der Luft durchführt. Mit anderen Worten kann der Nutzer als zweite Bediengeste seine Hand oder zumindest einen Finger der Hand in einer gleichmäßig fließenden Bewegung bewegen.

Die Bediengeste - erste Bediengeste und/oder zweite Bediengeste - korreliert dabei bevorzugt mit einer Ausdehnung des zumindest einen vorbestimmten Bereichs. Beispielsweise bildet sich der zumindest eine vorbestimmte Bereich dadurch, welche der Bereiche oder welchen Bereich der Nutzer durch seine Hand oder seinen und/oder seine Finger an der Scheibe berührt. Alternativ bildet sich der zumindest eine vorbestimmte Bereich dadurch, entlang welcher Bereiche oder welches Bereichs der Scheibe sich die Hand oder der Finger oder zumindest zwei Finger bewegt oder bewegen.

Durch die Bediengeste - erste Bediengeste und/oder zweite Bediengestekann der Nutzer die Ausdehnung und/oder Form des zumindest einen vorbestimmten Bereichs vorgeben oder bestimmen oder festlegen. Mit "Ausdehnung des vorbestimmten Bereichs" ist hier bevorzugt eine Erstreckung des zumindest einen vorbestimmten Bereich innerhalb der Sichtschutzfläche gemeint.

Um das erfindungsgemäße Verfahren durchzuführen, ist durch die Erfindung auch eine Scheibeneinrichtung bereitgestellt. Die Scheibeneinrichtung umfasst eine transparente Scheibe. Die transparente Scheibe kann beispielsweise aus Glas oder Kunststoff gebildet sein. Bevorzugt handelt es sich bei der transparenten Scheibe um eine Fensterscheibe. Ferner umfasst die Scheibeneinrichtung eine Anzeigeeinheit, welche dazu eingerichtet ist, einen interaktiven Sichtschutz an der Scheibe durch pixelweises Einblenden opaker Bildpunkte zu erzeugen. Die Bildpunkte bilden dabei eine zusammenhängende Sichtschutzfläche. Weiterhin umfasst die Scheibeneinrichtung eine Erfassungseinrichtung, welche dazu eingerichtet ist, eine Bedienhandlung eines Nutzers, welche eine Auswahl eines Stellbereiches und eine Bewegung relativ zu der Scheibe umfasst, zu erfassen. Schließlich umfasst die Scheibeneinrichtung eine Steuereinrichtung, welche dazu eingerichtet ist, eine Ausdehnung der Sichtschutzfläche an dem Stellbereich in Abhängigkeit von der erfassten Bewegung einzustellen. Erfindungsgemäß ist die Steuereinrichtung ferner dazu eingerichtet, beim Einstellen der Ausdehnung an dem Stellbereich zumindest einen vorbestimmten Bereich der Sichtschutzfläche in Abhängigkeit von der Bewegung zu öffnen und dadurch in dem zumindest einen vorbestimmten Bereich die opaken Bildpunkte auszublenden. Die Steuereinrichtung ist ferner dazu ausgebildet, nach dem Öffnen des zumindest einen vorbestimmten Bereichs eine Blickrichtung des Nutzers zu erfassen und in Abhängigkeit von der Blickrichtung den zumindest einen vorbestimmten Bereich innerhalb der Sichtschutzfläche zu bewegen.

Um die Sichtschutzfläche durch pixelartiges Einblenden opaker Bildpunkte bereitstellen zu können, umfasst die Anzeigeeinheit bevorzugt ein LCD-Display (englisch liquid crystal display), insbesondere als transparentes LCD Display, und/oder ein OLED-Display, insbesondere als transparentes OLED Display.

OLED Displays können Licht weder blockieren noch ablenken. Ein Sichtschutz oder eine Sichtschutzfläche kann bei einem OLED-Display beispielsweise durch Überstrahlung umgesetzt werden. LCD-Displays können zwar Licht durch Polarisation blockieren, selbst jedoch kein Licht aussenden. Aus diesem Grund benötigen LCD-Displays insbesondere eine Hintergrundbeleuchtung. Um die Sichtschutzfläche durch pixelartiges Einblenden opaker Bildpunkte bereitstellen zu können und vorbestimmte Bereiche durch Ausblenden opaker Bildpunkte zu ermöglichen, wird bevorzugt eine selbstleuchtendes OLED-Display oder eine selbstleuchtende OLED-Schicht als Hintergrundbeleuchtung und ein darauf befindliches LCD-Display oder eine darauf befindliche LCD-Schicht angeordnet. Die LCD-Schicht dient dabei bevorzugt zur Anzeige des Sichtschutzes oder der Sichtschutzfläche. Alternativ kann eine LCD-Schicht mit beidseitig angeordneten OLED-Schichten zur Anzeige der Sichtschutzfläche verwendet werden. Mit anderen Worten kann die Anzeigeeinheit einen Schichtaufbau aus einer OLED-Schicht, einer LCD-Schicht und einer weiteren OLED Schicht aufweisen. Ein derartiger Schichtaufbau hat den Vorteil, dass beide Seiten separat voneinander ansteuerbar und die Inhalte jeweils nur von einer Betrachtungsrichtung durch die Scheibe aus zu erkennen sind.

Bei einem LCD-Display, welches auch als Flüssigkristallanzeige bezeichnet werden kann, handelt es sich bevorzugt um eine Anzeige oder einen Bildschirm, dessen Funktion darauf beruht, dass Flüssigkristalle die Polarisationsrichtung von Licht beeinflussen, wenn ein bestimmtes Maß an elektrischer Spannung angelegt wird.

Ein OLED-Display ist bevorzugt ein selbstleuchtendes Display. Eine Hintergrundbeleuchtung wird bei einem OLED-Display im Vergleich zu einem LED-Display nicht benötigt. Die Abkürzung OLED steht dabei für organische Leuchtdiode (engl. organic light-emitting diode). OLED-Displays haben eine vorbestimmte Struktur mit organischen Schichten oder Filmen zwischen zwei Elektroden, der Anode und der Kathode. Bei den organischen Filmen oder Schichten werden bevorzugt zwei Arten organischer Materialien eingesetzt. Als organische Materialien eignen sich zum Beispiel Aluminiumhydroxyquinolin oder langkettige Polymere, wie beispielsweise Polyparaphenylenevinylen.

Auf eine transparente Anode, die zum Beispiel aus Indium-Zinn-Oxid (ITO) besteht, und sich auf einer Scheibe, insbesondere einer Glasscheibe, befindet, wird ein organischer Film, beispielsweise als Lochleitungsschicht oder konduktive Polymerschicht, aufgebracht. Darüber beziehungsweise an dem organischen Film ist eine zweite organische Schicht, beispielsweise emissive Polymerschicht, mit einer Kathode bestehend aus Metallen wie Barium oder Kalzium aufgebracht. Die letzte Ebene ist eine weitere Scheibe, welche insbesondere als Glasscheibe ausgebildet ist. Die Dicke des gesamten Moduls, also des OLED-Displays, wird bevorzugt durch die Dicke der Scheiben bestimmt. Wird nun eine Spannung angelegt, so werden Elektronen (negative Ladungen) aus der Kathode und gleichzeitig Löcher (positive Ladungen) von der Anode mit hoher Austrittsarbeit in das organische Material injiziert. Im angelegten elektrischen Feld wandern Löcher und Elektronen durch den organischen Film und bilden bei ihrer Rekombination angeregte Zustände, die unter Aussendung von Photonen zerfallen und dabei Licht erzeugen.

Durch eine derartige Ausgestaltung des LCD-Displays und/oder OLED-Displays sind das LCD-Display und/oder das OLED-Display bevorzugt dazu eingerichtet, pixelweise opake Bildpunkte einzublenden.

Durch das LCD-Display und/oder das OLED-Display kann auf besonders einfache und zuverlässige Art und Weise eine Anzeigeeinheit bereitgestellt werden. Ferner weisen LCD- und/oder OLED-Displays eine besonders geringe Dicke auf. Ist das Display bevorzugt an der Scheibe angeordnet, erhöht sich die Scheibendicke nur unwesentlich.

Eine vorteilhafte Ausführungsform sieht vor, dass die Erfassungseinrichtung zumindest eine Kamera und/oder zumindest eine berührungssensitive Bedienfläche, insbesondere eine transparente Touchfolie, umfasst. Die berührungssensitive Bedienfläche weist bevorzugt eine Elektrodenschicht auf. Insbesondere ist in der berührungssensitiven Bedienfläche eine Matrix aus Elektroden vorgesehen, wobei jeder Elektrode eine Koordinate zugeordnet sein kann. Bevorzugt ist die berührungssensitive Bedienfläche an der Anzeigeeinheit angeordnet. So kann die Scheibeneinrichtung beispielsweise einen vorbestimmten Schichtaufbau aus Scheibe, Anzeigeeinheit und berührungssensitiver Bedienfläche aufweisen. Alternativ kann die berührungssensitive Bedienfläche auch eine Oberfläche der Anzeigeeinheit bilden. Mit anderen Worten kann die berührungssensitive Bedienfläche in die Anzeigeeinheit integriert sein. Durch die Kamera und/oder die berührungssensitive Bedienfläche kann eine Bedienhandlung des Nutzers und eine Auswahl des Stellbereichs des Nutzers besonders einfach und zuverlässig erfasst werden.

In vorteilhafter Weise ist die berührungssensitive Bedienfläche an einer Scheibenfläche der Scheibe angeordnet. Ferner kann die Erfassungseinrichtung eine weitere berührungssensitive Bedienfläche aufweisen, wobei die zusätzliche berührungssensitive Bedienfläche an einer der Scheibenfläche gegenüberliegenden Scheibenfläche der Scheibe angeordnet ist. Dadurch kann ein Nutzer auf beiden Seiten der Scheibe mit dem Sichtschutz interagieren. Das ist beispielsweise von Vorteil, wenn die Scheibe als Seitenscheibe eines Kraftfahrzeugs ausgebildet ist. Bei dieser Ausführungsform kann der Nutzer dann, wenn er die Sichtschutzfläche einstellt, von außen schauen, ob sich noch etwas im Kraftfahrzeug befindet.

Die Scheibeneinrichtung kann in der beschriebenen Weise in einem Kraftfahrzeug realisiert sein. Entsprechend sieht die Erfindung auch ein Kraftfahrzeug mit einer Ausführungsform der erfindungsgemäßen Scheibeneinrichtung vor. Das erfindungsgemäße Kraftfahrzeug ist bevorzugt als Kraftwagen, insbesondere als Personenkraftwagen, ausgestaltet. Die Scheibe der Scheibeneinrichtung bildet bevorzugt eine Fensterscheibe des Kraftfahrzeugs, beispielsweise eine Heckscheibe und/oder Seitenscheibe und/oder Frontscheibe.

Eine vorteilhafte Weiterbildung der Erfindung sieht vor, dass die Scheibeneinrichtung eine weitere Erfassungseinrichtung aufweist, welche auf eine Umgebung des Kraftfahrzeugs gerichtet ist. Die Steuereinrichtung der Scheibeneinrichtung ist dabei dazu eingerichtet, einen durch den Nutzer mit den Augen fixierten Punkt durch den zumindest einen vorbestimmten Bereich in der Umgebung des Kraftfahrzeugs einem durch die weitere Erfassungseinrichtung erfassten Bildpunkt zuzuordnen und den zumindest einen vorbestimmten Bereich innerhalb der Sichtschutzfläche derart zu verschieben, dass der durch den Nutzer fixierte Punkt bei einer Bewegung des Kraftfahrzeugs durch den Nutzer durch den zumindest einen vorbestimmten Bereich hindurch weiterhin fixierbar ist. Dadurch ist der Sichtschutz besonders flexibel ausgestaltet. Der Nutzer kann dadurch beispielsweise ein Objekt oder eine Person durch den vorbestimmten Bereich und die Scheibe betrachten, auch wenn das Kraftfahrzeug sich bewegt.

Alternativ können auch weitere Bauteile des Kraftfahrzeugs durch die Scheibe ersetzt werden. Beispielsweise kann ein Boden und/oder ein Dach des Kraftfahrzeugs zumindest teilweise durch die Scheibe gebildet sein. Mit anderen Worten kann die Scheibe eine Seitenverkleidung und/oder einen Dachhimmel und/oder einen Boden des Kraftfahrzeugs bilden. Die Scheibe kann also im Kraftfahrzeug zum Einsatz kommen, wo üblicher Weise ein Blech oder eine alternative Kraftfahrzeugkomponente die Seitenverkleidung und/oder den Dachhimmel und/oder den Boden des Kraftfahrzeugs bildet.

Zum Beispiel kann die Scheibe dort in dem Kraftfahrzeug angeordnet sein, wo beispielsweise ein Schiebedach angeordnet ist. Die Scheibe kann also zum Beispiel zumindest einen Teil des Dachhimmels des Kraftfahrzeugs bilden. Damit an einem sonnigen Tag die Sonne oder das Licht nicht über die Scheibe an dem Dachhimmel des Kraftfahrzeugs in den Innenraum des Kraftfahrzeugs scheint, kann die Scheibe mit dem Sichtschutz bedeckt sein. Möchte der Nutzer aber dennoch durch den Dachhimmel des Kraftfahrzeugs sehen, so kann er durch die Bedienhandlung ein Guckloch "in" den Dachhimmel an der Scheibe machen. Dazu führt er mit seinen Fingern beispielsweise die erste Bediengeste durch. Möchte der Nutzer mehrere Gucklöcher "im" Dachhimmel an der Scheibe erzeugen, so kann er an unterschiedlichen Stellbereichen an der Scheibe die erste Bediengeste durchführen.

Um den Boden und/oder das Dach oder den Dachhimmel und/oder die Seitenverkleidung des Kraftfahrzeugs zumindest bereichsweise oder teilweise durch die Scheibe zu bilden, kann es erforderlich sein, dass die Scheibe eine vorbestimmte mechanische Stabilität erfüllt, sodass beispielsweise in Falle eines Unfalls oder Crashs des Kraftfahrzeugs die Sicherheit der Insassen des Kraftfahrzeugs gewährleistet ist. Beispielsweise kann die Scheibe als Panzerglas und/oder Verbundsicherheitsglas ausgebildet sein.

Bestimmte Bauteile im Kraftfahrzeug, wie beispielsweise Bereiche der Seitenverkleidung, können zur Gewährleistung der Sicherheit nicht durch eine Scheibe gebildet sein. Um einen Nutzer aber dennoch einen Blick oder ein Sichtfeld aus dem Kraftfahrzeug, beispielsweise durch die Bereiche der Seitenverkleidung, zu ermöglichen, kann die Scheibeneinrichtung eine weitere Anzeigeeinheit aufweisen. Diese weitere Anzeigeeinheit kann an einer Scheibenkante der Scheibe anliegen oder angrenzen. Ferner kann die Erfassungseinrichtung eine Kamera aufweisen, welche auf eine Umgebung des Kraftfahrzeugs gerichtet ist und dazu eingerichtet ist, Bilddaten zu erfassen, wobei die weitere Anzeigeeinheit dazu eingerichtet ist, die von der Kamera erfassten Bilddaten anzuzeigen, um ein gegenüber der Scheibe vergrößertes Sichtfeld in die Umgebung des Kraftfahrzeugs bereitzustellen. Durch die Scheibe wird dem Nutzer bevorzugt ein Sichtfeld in die Umgebung des Kraftfahrzeugs bereitgestellt. Durch die weitere Anzeigeeinheit kann ein gegenüber dem Sichtfeld der Scheibe vergrößertes Sichtfeld bereitgestellt werden.

Die für das erfindungsgemäße Verfahren beschriebenen Vorteile und bevorzugten Ausführungsformen gelten auch für das erfindungsgemäße Kraftfahrzeug und die erfindungsgemäße Scheibeneinrichtung und umgekehrt.

Im Folgenden ist ein Ausführungsbeispiel der Erfindung beschrieben. Hierzu zeigt:
- Fig. 1: eine schematische Darstellung einer Ausführungsform eines Kraftfahrzeugs mit der erfindungsgemäßen Scheibeneinrichtung und einer Interaktion eines Nutzers mit einem Sichtschutz der Scheibeneinrichtung;
- Fig. 2: eine schematische Darstellung des Kraftfahrzeugs mit der Scheibeneinrichtung von Fig. 1 bei einer weiteren Interaktion des Nutzers mit dem Sichtschutz der Scheibeneinrichtung;
- Fig. 3: eine schematische Darstellung des Kraftfahrzeugs mit der Scheibeneinrichtung von Fig. 1 bei einer weiteren Interaktion des Nutzers mit dem Sichtschutz der Scheibeneinrichtung;
- Fig. 4: eine schematische Darstellung des Kraftfahrzeugs mit der Scheibeneinrichtung von Fig. 1 bei einer weiteren Interaktion des Nutzers mit dem Sichtschutz der Scheibeneinrichtung; und
- Fig. 5: eine schematische Darstellung des Kraftfahrzeugs mit der Scheibeneinrichtung.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

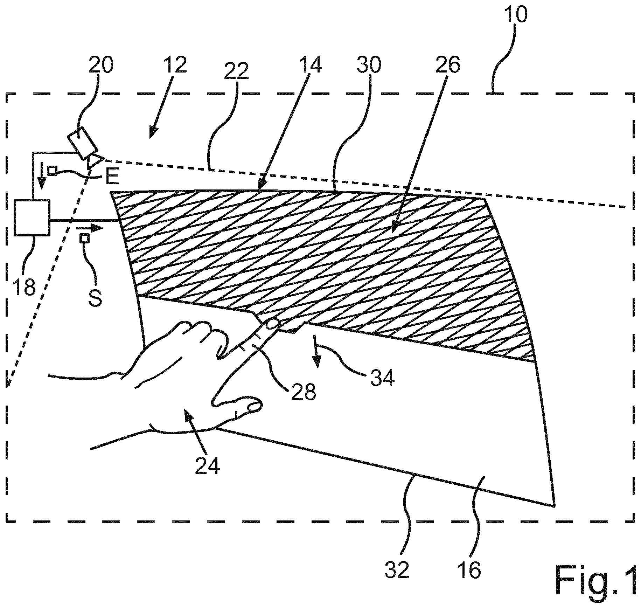

In Fig. 1 ist ein Kraftfahrzeug 10 mit einer Scheibeneinrichtung 12 gezeigt. Die Scheibeneinrichtung 12 umfasst eine transparente Scheibe 14, eine Anzeigeeinheit 16, eine Erfassungseinrichtung und eine Steuereinrichtung 18. Wie in Fig. 1 gezeigt ist, kann die Erfassungseinrichtung beispielsweise eine Kamera 20 aufweisen. Die Kamera 20 spannt einen Erfassungsbereich 22 auf. Beispielsweise erfasst die Kamera 20 als Erfassungsbereich 22 einen Bereich eines Innenraums des Kraftfahrzeugs 10.

Die Anzeigeeinheit 16 weist bevorzugt die gleiche Dimensionierung wie die Scheibe 14 auf. Mit anderen Worten ist die Anzeigeeinheit 16 bevorzugt in Überdeckung mit der Scheibe 14 angeordnet. Bei der Scheibe 14 handelt es sich bevorzugt um eine Fensterscheibe des Kraftfahrzeugs 10. Beispielsweise kann die Scheibe 14 eine Frontscheibe oder Seitenscheibe oder Heckscheibe des Kraftfahrzeugs 10 bilden. Das Kraftfahrzeug 10 umfasst bevorzugt mehrere solcher Scheiben 14. Die Scheibe 14 ist bevorzugt aus Glas oder Kunststoff gebildet.

Die Anzeigeeinheit 16 kann beispielsweise als OLED Display, insbesondere transparentes OLED Display, ausgebildet sein. Alternativ kann die Scheibe 14 auch Bestandteil des OLED Display sein. Die Anzeigeeinheit 16 ist dazu eingerichtet, durch pixelweises Einblenden opaker Bildpunkte einen Sichtschutz 26 zu erzeugen, wobei die Bildpunkte eine zusammenhängende Sichtschutzfläche bilden.

In Zusammenschau der Figuren Fig. 1 bis Fig. 4 soll im Folgenden das Verfahren zum Betreiben des interaktiven Sichtschutzes 26 der Scheibeneinrichtung 12 näher erläutert werden.

Die Erfassungseinrichtung, wie beispielsweise die Kamera 20, ist dazu eingerichtet, eine Bedienhandlung eines Nutzers 24 zu erfassen. Damit der Sichtschutz 26 die Scheibe 14 zumindest teilweise überdeckt oder bedeckt, kann der Nutzer 24 zunächst eine Aktivierungsgeste ausführen, welche durch die Erfassungseinrichtung erfasst wird. Wird die Aktivierungsgeste durch die Erfassungseinrichtung erfasst, übermittelt diese eine Erfassungssignal E an die Steuereinrichtung 18, welche daraufhin die Anzeigeeinheit 16 ansteuern kann, indem die Steuereinrichtung 18 beispielsweise ein Steuersignal S an die Anzeigeeinheit 16 übermittelt. Durch eine Ansteuerung der Anzeigeeinheit 16 blendet diese die opaken Bildpunkte ein, um eine zusammenhängende Sichtschutzfläche bereitzustellen. In Fig. 1 führt der Nutzer 24 beispielsweise mit einem Finger 28 die Aktivierungsgeste durch. Dabei bewegt der Nutzer 24 den Finger 28 von einer Scheibenoberkante 30 in Richtung einer Scheibenunterkante 32. In Fig. 1 wird das durch den Pfeil 34 verdeutlicht. Die Aktivierungsgeste kann beispielsweise durch die Kamera 20 erfasst werden.

Alternativ oder zusätzlich kann die Anzeigeeinheit 16 auch eine berührungsempfindliche oder berührungssensitive Bedienfläche aufweisen, welche dazu eingerichtet ist, eine Bewegung der Hand oder des Fingers 28 an der Scheibe 14 zu erfassen. Beispielsweise kann die berührungsempfindliche Bedienfläche als Touchfolie ausgebildet sein. Bevorzugt ist die berührungssensitive Bedienfläche an der Scheibe 14 angeordnet. Bevorzugt erstreckt sich die berührungssensitive Bedienfläche über eine Scheibenfläche, die durch die Sichtschutzfläche bedeckbar ist. Die berührungssensitive Bedienfläche weist dazu bevorzugt eine Elektrodenschicht auf. Insbesondere ist in der berührungssensitiven Bedienfläche eine Matrix aus Elektroden vorgesehen, wobei jeder Elektrode eine Koordinate zugeordnet sein kann. Dadurch kann die Position des Fingers 28 oder der Hand auf oder an der berührungssensitiven Bedienfläche oder der Scheibe 14 bestimmt werden.

Durch die Aktivierungsgeste kann der Sichtschutz 26 beispielsweise aus einer Referenzposition, in welcher die Scheibe 14 vollständig frei liegt, in eine Abdunkelposition verlagert oder bewegt werden. Dabei kann der Sichtschutz 26 soweit aus der Referenzposition verlagert werden, bis der Nutzer 24 die Aktivierungsgeste beendet. Bewegt der Nutzer 24 beispielsweise die Hand oder den Finger 28 von der Scheibenoberkante 30 bis zu der Scheibenunterkante 32, wird die Scheibe 14 vollständig durch die Sichtschutzfläche des Sichtschutzes 26 bedeckt oder überdeckt. Bewegt der Nutzer 24 die Hand oder den Finger 28 nicht bis zur Scheibenunterkante 32, sondern nur bis zu einem vorbestimmten Punkt an der Scheibe 14, so bedeckt die Sichtschutzfläche des Sichtschutzes 26 die Scheibe 14 nur bereichsweise oder teilweise. In Fig. 1 bedeckt die Sichtschutzfläche zum Beispiel eine Hälfte der Scheibe 14.

Der Sichtschutz 26 kann beispielsweise ein Rollo darstellen, welches durch den Nutzer 24 betätigt wird. Durch die Anzeigeeinheit 16 kann der Sichtschutz oder das Rollo designtechnisch gestaltet werden. Beispielsweise kann das Rollo durch physikalische Materialien, wie beispielsweise eine Stoffbahn oder durch Lamellen, dargestellt sein.

Bedeckt die Sichtschutzfläche also nun die Scheibe 14 teilweise oder vollständig, so kann der Nutzer 24 eine Ausdehnung der Sichtschutzfläche einstellen. Dazu erfasst die Erfassungseinrichtung eine Bedienhandlung des Nutzers 24. Die erfasste Bedienhandlung umfasst eine Auswahl eines Stellbereichs und eine Bewegung der Hand oder des Fingers 28 oder mehrerer Finger der Hand relativ zu der Scheibe 14. Der Stellbereich wird durch den Nutzer 24 ausgewählt, indem der Nutzer 24 seine Hand oder zumindest einen Finger 28 seiner Hand relativ zu der Scheibe 14 positioniert. Anschließend wird eine Bewegung der Hand oder des Fingers 28 oder mehrerer Finger durch die Erfassungseinrichtung erfasst.

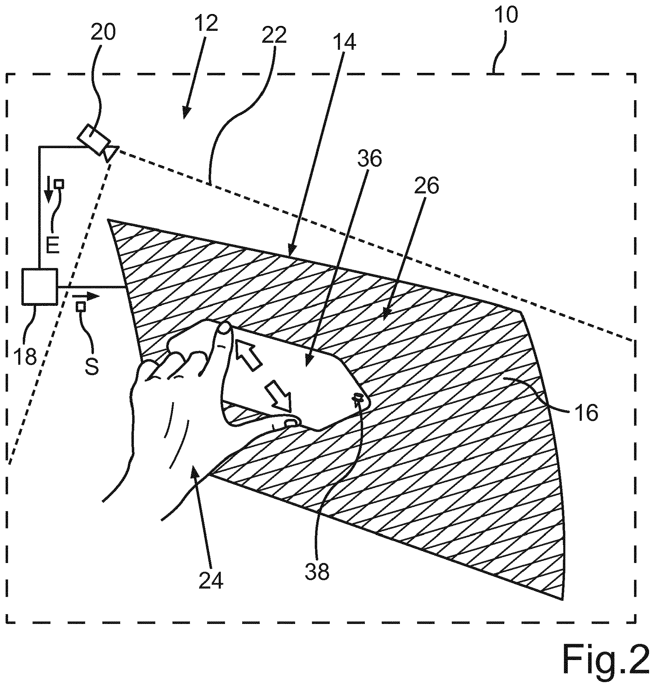

In Fig. 2 ist eine Ausführungsform einer Bewegung gezeigt. Diese Ausführungsform stellt eine erste Bediengeste dar. Bei der ersten Bediengeste bewegt der Nutzer 24 zwei Finger der Hand aus einer Startposition voneinander weg. Die Bewegung wird durch die zwei Pfeile in Fig. 2 verdeutlicht. Beispielsweise können sich in der Startposition die Fingerkuppen der zwei Finger berühren. Anschließend bewegt der Nutzer 24 die zwei Finger voneinander weg. Mit anderen Worten kann der Nutzer 24 seine zwei Finger von der Startposition aus in entgegensetzte Richtungen bewegen. Durch die Bewegung oder die erste Bediengeste, die durch den Nutzer 24 ausgeführt wird, wird ein vorbestimmter Bereich 36 der Sichtschutzfläche zu einem vorbestimmten Maß geöffnet. In dem zumindest einen vorbestimmten Bereich 36 wird die Scheibe 14 frei gelegt. Die restliche Sichtschutzfläche umgibt dabei den zumindest einen vorbestimmten Bereich 36. Durch die erste Bediengeste kann der Nutzer 24 also ein Guckloch in der Sichtschutzfläche bilden.

Durch die Bewegung oder Bediengeste kann der Nutzer 24 nicht nur den vorbestimmten Bereich 36 öffnen, sondern auch gleich eine Größe oder Ausdehnung des vorbestimmten Bereichs 36 einstellen. In Bezug auf Fig. 2 bedeutet das zum Beispiel, dass sich der zumindest eine vorbestimmte Bereich 36 soweit öffnet, soweit wie der Nutzer 24 seine zwei Finger auseinander bewegt. In Fig. 2 weist der zumindest eine vorbestimmte Bereich 36 eine hexagonale Form auf. Alternativ kann der zumindest eine vorbestimmte Bereich 36 auch eine runde oder rechteckige Form aufweisen.

Damit das Guckloch oder der vorbestimmte Bereich 36 nach dem Ausführen der ersten Bediengeste nicht gleich wieder zugeht, kann der Nutzer 24 eine Bestätigungsgeste ausführen. Dazu kann der Nutzer 24 beispielsweise mit seinem Finger in den vorbestimmten Bereich 36 an die Scheibe 14 tippen. Alternativ kann der Nutzer 24 auch als Bestätigungsgeste ein Bedienelement, wie beispielsweise einen Knopf, betätigen. Damit dem Nutzer 24 dann die Fixierung des vorbestimmten Bereichs 36 angezeigt wird, kann die Anzeigeeinheit 16 dazu eingerichtet sein, ein Icon 38 in oder an dem vorbestimmten Bereich 36 anzuzeigen. In Fig. 2 wird als Icon 38 zum Beispiel eine Stecknadel durch die Anzeigeeinheit 16 eingeblendet.

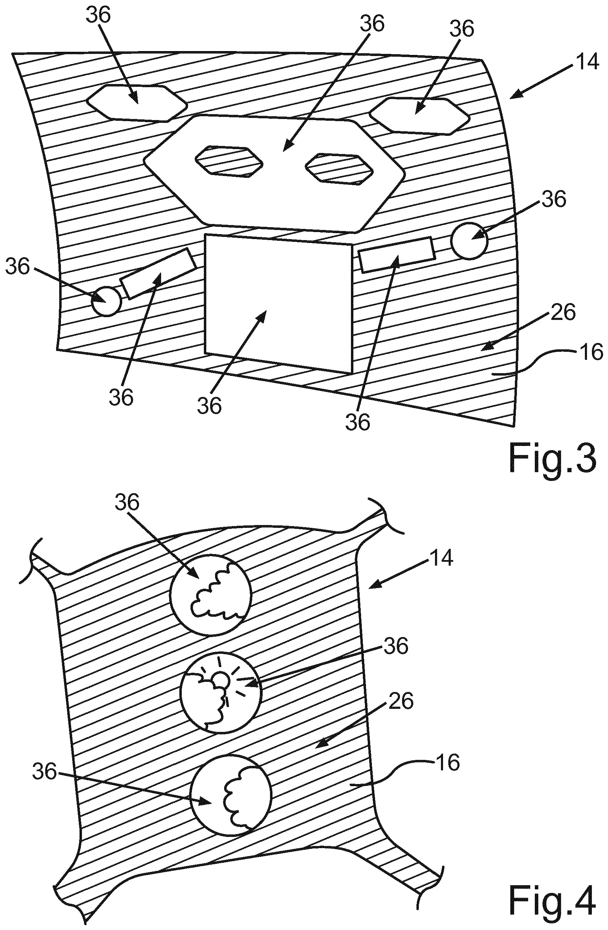

Der Nutzer 24 kann auch mehrere Gucklöcher oder vorbestimmte Bereiche 36 erzeugen. Das ist beispielsweise in Fig. 3 gezeigt. Die vorbestimmten Bereiche 36 weisen, wie in Fig. 3 gezeigt ist, unterschiedliche Formen auf. Um die vorbestimmten Bereiche 36 unterschiedlich zu gestalten, kann der Nutzer 24 eine zweite Bediengeste durchführen. Bei der zweiten Bediengeste kann der Nutzer 24 mit der Hand oder zumindest einem Finger 28 der Hand eine Wischbewegung oder Malbewegung durchführen. Mit anderen Worten kann der Nutzer 24 als zweite Bediengeste seine Hand oder zumindest einen Finger 28 der Hand in einer gleichmäßig fließenden Bewegung bewegen. Mit anderen Worten kann der Nutzer 24 die vorbestimmten Bereiche 36 malen. Die Bereiche der Scheibe 14 über die der Nutzer 24 mit seinem Finger 28 oder seiner Hand fährt, werden durch die Erfassungseinrichtung erfasst und frei gelegt oder geöffnet. Der vorbestimmte Bereich 36 kann dabei beispielsweise eine runde oder rechteckige oder dreieckige Form aufweisen. Alternativ kann der vorbestimmte Bereich auch die Form eines Hexagons oder einen Schlitzes oder Spalts aufweisen.

In Fig. 3 ist beispielsweise eine Figur gemalt. In Fig. 4 ist eine weitere Ausführungsform einer Anordnung und Gestaltung der vorbestimmten Bereiche 36 gezeigt. Die Scheibe 14 kann beispielsweise einen Dachhimmel des Kraftfahrzeugs 10 bilden. Erzeugt der Nutzer 24 die vorbestimmten Bereiche 36, welche in Fig. 4 kreisrund ausgebildet sind, so kann der Nutzer 24 den Himmel durch die Scheibe 14 sehen.

Alternativ oder zusätzlich kann der Nutzer 24 auch Transparenzstufen des Sichtschutzes 26 einstellen. Dazu kann er beispielsweise ein Bedienelement der Scheibeneinrichtung 12, wie einen Drehknopf, bedienen oder manuell durch eine Eingabe eines Zahlenwertes mittels Tasten eine Transparenzstufe vorgeben. Die Transparenzstufen können dabei zwischen 0 % und 90 % eingestellt werden. Bei 0% ist der Sichtschutz vollständig lichtundurchlässig oder undurchsichtig.

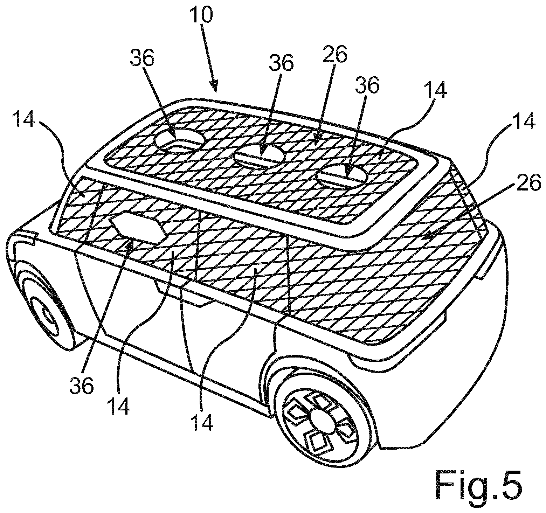

In Fig. 5 ist das Kraftfahrzeug 10 mit mehreren Scheiben 14 gezeigt, welche jeweils durch die Sichtschutzfläche des Sichtschutzes 26 verdunkelt oder abgedeckt sind.

Alternativ oder zusätzlich kann der Nutzer 24 auch den Sichtschutz 26 von beiden Seiten der Scheibe 14 betätigen. Dazu ist beispielsweise eine berührungssensitive Bedienfläche an einer Seite der Scheibe 14 angeordnet, welche einem Innenraum des Kraftfahrzeugs 10 zugewandt ist. Zudem kann die Erfassungseinrichtung eine weitere berührungssensitive Bedienfläche aufweisen, wobei die weitere berührungssensitive Bedienfläche an einer der Seite gegenüberliegenden Seite der Scheibe 14 angeordnet ist. Diese Seite, an der die weitere berührungssensitive Bedienfläche angeordnet ist, ist bevorzugt einer Umgebung des Kraftfahrzeugs 10 zugewandt. Dadurch kann ein Nutzer 24 auf beiden Seiten der Scheibe 14 mit dem Sichtschutz interagieren. Dadurch kann der Nutzer 24 auch von außen Gucklöcher an der Scheibe 14 oder den Scheiben 14 bilden und von außen in den Innenraum des Kraftfahrzeugs 10 schauen.

Damit nicht jeder beliebige Nutzer 24 den Sichtschutz 26 betätigen kann, kann die Erfassungseinrichtung zunächst den Nutzer 24 identifizieren. Das ist insbesondere der Fall, wenn der Nutzer 24 von außen den Sichtschutz 26 einstellen möchte. Die Erfassungseinrichtung kann beispielsweise eine weitere Kamera umfassen, welche dazu eingerichtet ist, den Nutzer 24 zu erfassen oder zu identifizieren. Zusätzlich oder alternativ kann die Erfassungseinrichtung dazu eingerichtet sein, ein tragbares mobiles Gerät des Nutzers, insbesondere ein Mobiltelefon und/oder eine elektrische Uhr, insbesondere eine Smartwatch, und/oder ein Tablet zu erfassen und zu identifizieren. Durch die Identifikation oder Identifizierung des Nutzers 24 oder die Authentifizierung wird festgestellt, ob der Nutzer 24 autorisiert oder berechtigt ist, die Betätigung oder Einstellung des Sichtschutzes 26 vorzunehmen. Nähert sich also beispielsweise der Nutzer 24 von außen dem Kraftfahrzeug 10 oder der Scheibe 14, so kann die Erfassungseinrichtung zunächst den Nutzer 24 erfassen und identifizieren. Ist der Nutzer 24 identifiziert, kann die Erfassungseinrichtung beispielsweise ein Bestätigungssignal an die Steuereinrichtung 18 (in Fig. 5 nicht gezeigt) übermitteln. Erst dann kann der Nutzer 24 den Sichtschutz 26 einstellen. Dadurch kann der Nutzer 24 beispielsweise von außen in den Innenraum des Kraftfahrzeugs 10 sehen.

Insgesamt ist durch die Erfindung ein digitales Rollo mit interaktiven Gucklöchern beschrieben.

In einer besonders bevorzugten Ausführungsform kann die transparente Scheibe eines Fahrzeugs mit einem Display versehen sein, welches ein digitales Rollo oder einen digitalen Sichtschutz aufweist. Das Rollo kann beispielsweise mit Touchbewegungen rauf- oder runtergezogen werden kann. Wenn das Rollo nach unten gezogen ist, können im Rollo oder der Rollofläche oder der Sichtschutzfläche des Rollos Gucklöcher gemacht werden. Nachdem das Rollo rauf- oder runtergezogen (oder seitlich) worden ist, können mit Touchbewegungen an vorbestimmten oder beliebig durch das Rollo abgedunkelte Orten oder Bereichen Gucklöcher gemacht oder gebildet werden. Die Gucklöcher können nach einer bestimmten Zeit wieder automatisch zugehen oder mit einer zusätzlichen Bedienung fixiert werden.

Wenn der Insasse oder Nutzer von dem Kraftfahrzeug ein bestimmtes Objekt durch das Guckloch betrachtet, kann sich das Guckloch so mitbewegen, dass das bestimmte Objekt trotz Bewegung des Kraftfahrzeugs immer sichtbar bleibt.

Zusätzlich oder alternativ kann die Scheibe mit dem Rollo dort, wo normalerweise die Seitenverkleidung und/oder der Dachhimmel oder Boden ist, vorgesehen sein. Dort können digitale Gucklöcher gemacht oder erzeugt werden, so dass man "durch das Blech" schauen kann. Bei diese Ausführungsform kann man durch das Kraftfahrzeug beziehungsweise Kraftfahrzeugkomponenten (zum Beispiel Seitenverkleidung) schauen. Zum Beispiel, um besser einzuparken, besser eine Ampel zu sehen oder besser die Landschaft anschauen zu können.

Die Scheibe kann außen an dem Kraftfahrzeug zusätzlich oder alternativ mit einer Touchfolie versehen sein, so dass eine Person, die dazu berechtigt ist, beispielsweise nach einer Identifikation über Handy und/oder Kamera und/oder Smartwatch, von außen Gucklöcher machen kann. Bei dieser Ausführungsform kann man von außen schauen, ob sich noch etwas im Kraftfahrzeug befindet. Alternativ kann dem Kraftfahrzeug sein eigenes Aussehen geben werden.

Zur technischen Umsetzung sind die Scheiben oder eine Scheibe des Kraftfahrzeugs bevorzugt mit einem Display oder Displays versehen. Bevorzugt weist das Display Touchfunktionalitäten auf. Als transparentes Display kann beispielsweise ein transparentes OLED Display verwendet werden.

Das Display und die Scheibe sind bevorzugt transparent oder durchsichtig ausgebildet, so dass beispielsweise von einem Innenraum des Kraftfahrzeugs nach außen in eine Umgebung des Kraftfahrzeugs geschaut werden kann. Bei Bedarf wird das Rollo mittels des Displays dargestellt. Mit Touch- oder Gestenbedienung, welche durch eine oder mehrere Kameras erfasst werden können, können die Gucklöcher erstellt werden.

Die Kameras können zusätzlich oder alternativ die Augenbewegungen des Nutzers oder Insassen erfassen, der die Gucklöcher generiert hat, und können diese verlinken mit den Objekten, die außerhalb vom Kraftfahrzeug sind. Beispielsweise können dazu Kameras verwendet werden, die nach außen gerichtet sind. Wenn ein Objekt in einer Umgebung des Kraftfahrzeugs länger angeschaut wird, kann das Guckloch während der Fahrt mitbewegt werden.

Die Türen und/oder Seitenverkleidungen und/oder das Dach und/oder die Schalttafel und/oder der Boden können versehen sein oder gebildet sein durch die Scheibe mit dem Display. Mit Touch- und/oder Gestenbedienung können virtuelle Gucklöcher durch die Bauteile des Kraftfahrzeugs, welche Türen und/oder Seitenverkleidungen und/oder Dach und/oder Schalttafel und/oder Boden darstellen, gemacht werden.

Die interaktiven Gucklöcher bieten eine hohe Flexibilität. Das ist vor allem ein Vorteil bei einem pilotierten Kraftfahrzeug. Wenn das Kraftfahrzeug zum Beispiel nachts fährt und die Insassen schlafen, kann einer der Insassen, der wach ist und nach draußen schauen will, ohne den anderen zu stören, ein oder mehrere Gucklöcher entstehen. Die Gucklöcher können sich automatisch wieder schließen oder festgepinnt werden. Die Form der Gucklöcher kann optional angepasst werden. Die Gucklöcher können zum Beispiel wie ein Kreis oder Viereck oder Hexagon oder wie ein Schlitz ausgebildet oder geformt sein. Auf digitale Weise können physikalischen Materialien, wie zum Beispiel Stoff oder Lamellen als Rollo oder Sichtschutz optisch nachgeahmt werden. Wenn ein Objekt durch ein Loch oder Guckloch angeschaut wird, kann sich das Loch oder Guckloch bewegen, so dass dies die Bewegung vom Fahrzeug kompensiert und das Objekt immer sichtbar bleibt. Kinder können hieraus ein Spiel machen, für Erwachsene gibt es auch einen "joy-ofuse". Ein Privacybereich oder Privatbereich kann individuell mit Gucklöchern gestaltet werden.

## Patentansprüche

1. Verfahren zum Betreiben eines interaktiven Sichtschutzes (26) an einer transparenten Scheibe (14) einer Scheibeneinrichtung (12), insbesondere in einem Kraftfahrzeug (10), wobei der Sichtschutz (26) mittels einer Anzeigeeinheit (16) der Scheibeneinrichtung (12) an der Scheibe (14) durch pixelweises Einblenden opaker Bildpunkte erzeugt wird, wobei die Bildpunkte eine zusammenhängende Sichtschutzfläche bilden, umfassend die Schritte:
- Erfassen einer Bedienhandlung eines Nutzers (24), welche eine Auswahl eines Stellbereiches und eine Bewegung relativ zu der Scheibe (14) umfasst, mittels einer Erfassungseinrichtung und
- Einstellen einer Ausdehnung der Sichtschutzfläche an dem Stellbereich in Abhängigkeit von der erfassten Bewegung mittels einer Steuereinrichtung (18), wobei
- beim Einstellen der Ausdehnung an dem Stellbereich zumindest ein vorbestimmter Bereich (36) der Sichtschutzfläche in Abhängigkeit von der Bewegung geöffnet wird und dadurch in dem zumindest einen vorbestimmten Bereich die opaken Bildpunkte ausgeblendet werden.
**dadurch gekennzeichnet,**
**dass** nach dem Öffnen des zumindest einen vorbestimmten Bereichs (36) eine Blickrichtung des Nutzers (24) erfasst wird und in Abhängigkeit von der Blickrichtung der zumindest eine vorbestimmte Bereich (36) innerhalb der Sichtschutzfläche bewegt wird.

2. Verfahren nach Anspruch 1,
**dadurch gekennzeichnet, dass**
die Ausdehnung der Sichtschutzfläche bei einer Erfassung der Bedienhandlung an einem von außen zugänglichen Bereich der Scheibe (14) erst nach einer Identifizierung des Nutzers (24) eingestellt wird.

3. Verfahren nach einem der vorhergehenden Ansprüche,
**dadurch gekennzeichnet, dass**
als Bewegung zumindest eine erste Bediengeste erfasst wird, wobei bei der ersten Bediengeste zumindest zwei Finger einer Hand des Nutzer (24) aus einer Startposition relativ zueinander bewegt werden.

4. Verfahren nach einem der vorhergehenden Ansprüche,
**dadurch gekennzeichnet, dass**
als Bewegung zumindest eine zweite Bediengeste erfasst wird, wobei bei der zweiten Bediengeste der Nutzer (24) mit einer Hand oder zumindest einem Finger (28) der Hand eine Wischbewegung oder Malbewegung an der Scheibe (14) oder frei in der Luft durchführt.

5. Scheibeneinrichtung (12) für ein Kraftfahrzeug (10) umfassend:
- eine transparente Scheibe (14),
- eine Anzeigeeinheit (16), welche dazu eingerichtet ist, einen Sichtschutz (26) an der Scheibe (14) durch pixelweises Einblenden opaker Bildpunkte zu erzeugen, wobei die Bildpunkte eine zusammenhängende Sichtschutzfläche bilden;
- eine Erfassungseinrichtung, welche dazu eingerichtet ist, eine Bedienhandlung eines Nutzers (24), welche eine Auswahl eines Stellbereiches und eine Bewegung relativ zu der Scheibe (14) umfasst, zu erfassen,
- eine Steuereinrichtung (18), welche dazu eingerichtet ist, eine Ausdehnung der Sichtschutzfläche an dem Stellbereich in Abhängigkeit von der erfassten Bewegung einzustellen, wobei
- die Steuereinrichtung (18) ferner dazu eingerichtet ist, beim Einstellen der Ausdehnung an dem Stellbereich zumindest einen vorbestimmten Bereich (36) der Sichtschutzfläche in Abhängigkeit von der Bewegung zu öffnen und dadurch in dem zumindest einen vorbestimmten Bereich (36) die opaken Bildpunkte auszublenden,
**dadurch gekennzeichnet,**
**dass** die Steuereinrichtung (18) ferner dazu ausgebildet ist, nach dem Öffnen des zumindest einen vorbestimmten Bereichs (36) eine Blickrichtung des Nutzers (24) zu erfassen und in Abhängigkeit von der Blickrichtung den zumindest einen vorbestimmten Bereich (36) innerhalb der Sichtschutzfläche zu bewegen.

6. Kraftfahrzeug (10) mit einer Scheibeneinrichtung (12) nach Anspruch 5.

7. Kraftfahrzeug (10) nach Anspruch 6,
**dadurch gekennzeichnet, dass**
die Scheibeneinrichtung (12) eine weitere Erfassungseinrichtung aufweist, welche auf eine Umgebung des Kraftfahrzeugs (10) gerichtet ist, wobei die Steuereinrichtung (18) dazu eingerichtet ist, einen durch den Nutzer (24) mit den Augen fixierten Punkt durch den zumindest einen vorbestimmten Bereich (36) in der Umgebung des Kraftfahrzeugs (10) einem durch die weitere Erfassungseinrichtung erfassten Bildpunkt zuzuordnen und den zumindest einen vorbestimmten Bereich (36) innerhalb der Sichtschutzfläche derart zu verschieben, dass der durch den Nutzer (24) fixierte Punkt bei einer Bewegung des Kraftfahrzeugs (10) durch den Nutzer (24) durch den zumindest einen vorbestimmten Bereich (36) hindurch weiterhin fixierbar ist.

## Claims

1. Method for operating an interactive visibility screen (26) on a transparent pane (14) of a pane device (12), in particular in a motor vehicle (10), wherein the visibility screen (26) is generated on the pane (14) by means of a display unit (16) of the pane device (12) by the pixel-wise fade-in of opaque image points, wherein the image points form a coherent visibility screen area, comprising the steps:
- detecting an operational action of a user (24) which comprises selecting a setting range and a movement relative to the pane (14) by means of a detection device and
- setting an expansion of the visibility screen area on the setting range as a function of the detected movement by means of a control device (18), wherein
- during the setting of the expansion on the setting range at least one predetermined area (36) of the visibility screen area is opened as a function of the movement, and thereby the opaque image points are faded out in the at least one predetermined area,
**characterised in that**
after opening the at least one predetermined area (36) a viewing direction of the user (24) is detected and as a function of the viewing direction the at least one predetermined area (36) is moved within the visibility screen area.

2. Method according to claim 1,
**characterised in that**
the expansion of the visibility screen area is set upon the detection of the operational action on an area of the pane (14) accessible from the outside only after identifying the user (24).

3. Method according to any of the preceding claims,
**characterised in that**
at least one first operating gesture is detected as the movement, wherein as the first operating gesture at least two fingers of one hand of the user (24) are moved relative to one another from a starting position.

4. Method according to any of the preceding claims,
**characterised in that**
at least one second operating gesture is detected as the movement, wherein as the second operating gesture the user (24) performs a wiping motion or a painting motion on the pane (14) or moves freely in the air with one hand or at least one finger (28).

5. Pane device (12) for a motor vehicle (10) comprising:
- a transparent pane (14);
- a display unit (16) configured to generate a visibility screen (26) on the pane (14) by the pixel-wise fade-in of opaque image points, wherein the image points form a coherent visibility screen area;
- a detection device which is configured to detect an operational action of a user (24), which comprises selecting a setting range and a movement relative to the pane (14);
- a control device (18) which is configured to set an expansion of the visibility screen area on the setting range as a function of the detected movement, wherein
- the control device (18) is also configured, when setting the expansion on the setting range to open at least one predetermined area (36) of the visibility screen area as function of the movement and thereby to fade out the opaque image point in the at least one predetermined area (36),
**characterised in that**
the control device (18) is also configured, after opening the at least one predetermined area (36) to detect a viewing direction of the user (24) and as a function of the viewing direction to move at least one predetermined area (36) within the visibility screen area.

6. Motor vehicle (10) with a pane device (12) according to claim 5.

7. Motor vehicle (10) according to claim 6,
**characterised in that**
the pane device (12) has an additional detection device which is directed to an area surrounding the motor vehicle (10), wherein the control device (18) is configured to assign a point fixed by the user (24) with their eyes by the at least one predetermined area (36) in the area surrounding the motor vehicle (10) to an image point detected by the additional detection device and to move the at least one predetermined area (36) within the visibility screen area such that the point fixed by the user (24) during a movement of the motor vehicle (10) can be further fixed by the user (24) by the at least one predetermined area (36).

## Revendications

1. Procédé de fonctionnement d'une protection visuelle interactive (26) au niveau d'une vitre transparente (14) d'un dispositif de vitre (12), en particulier dans un véhicule automobile (10), dans lequel la protection visuelle (26) est produite au moyen d'une unité d'affichage (16) du dispositif de vitre (12) au niveau de la vitre (14) par incrustation de type pixels de points d'image opaques, lesquels points d'image forment une surface de protection visuelle d'un seul tenant, comprenant les étapes :
- détection d'une opération de contrôle d'un utilisateur (24), laquelle comprend une sélection d'une zone de positionnement et un mouvement par rapport à la vitre (14), au moyen d'un dispositif de détection et
- réglage d'une extension de la surface de protection visuelle au niveau de la zone de positionnement, en fonction du mouvement détecté, au moyen d'un dispositif de commande (18),
- dans lequel, lors du réglage de l'extension au niveau de la zone de positionnement, au moins une zone prédéterminée (36) de la surface de protection visuelle est ouverte en fonction du mouvement et les points d'image opaques sont ainsi supprimés dans l'au moins une zone prédéterminée,
**caractérisé en ce que**,
après l'ouverture de l'au moins une zone prédéterminée (36), une direction du regard de l'utilisateur (24) est détectée et, en fonction de la direction du regard, l'au moins une zone prédéterminée (36) est déplacée à l'intérieur de la surface de protection visuelle.

2. Procédé selon la revendication 1,
**caractérisé en ce que**
l'extension de la surface de protection visuelle lors d'une détection de l'opération de contrôle au niveau d'une zone, accessible de l'extérieur, de la vitre (14) n'est réglée qu'après identification de l'utilisateur (24).

3. Procédé selon l'une quelconque des revendications précédentes,
**caractérisé en ce qu'**
on détecte au moins un premier geste de contrôle comme mouvement, premier geste de contrôle lors duquel au moins deux doigts d'une main de l'utilisateur (24) sont déplacés l'un par rapport à l'autre à partir d'une position initiale.

4. Procédé selon l'une quelconque des revendications précédentes,
**caractérisé en ce qu'**
on détecte au moins un deuxième geste de contrôle comme mouvement, deuxième geste de contrôle lors duquel l'utilisateur (24) effectue avec une main ou au moins un doigt (28) de la main un mouvement de balayage ou de peinture au niveau de la vitre (14) ou librement dans l'air.

5. Dispositif de vitre (12) pour un véhicule automobile (10), comprenant :
- une vitre (14) transparente,
- une unité d'affichage (16), qui est conçue pour produire une protection visuelle (26) au niveau de la vitre (14) par incrustation de type pixels de points d'image opaques, lesquels points d'image forment une surface de protection visuelle d'un seul tenant ;
- un dispositif de détection, qui est conçu pour détecter une opération de contrôle d'un utilisateur (24), laquelle comprend une sélection d'une zone de positionnement et un mouvement par rapport à la vitre (14),
- un dispositif de commande (18), qui est conçu pour régler une extension de la surface de protection visuelle au niveau de la zone de positionnement en fonction du mouvement détecté,
- dans lequel le dispositif de commande (18) est aussi conçu pour, lors du réglage de l'extension au niveau de la zone de positionnement, ouvrir au moins une zone prédéterminée (36) de la surface de protection visuelle en fonction du mouvement et supprimer ainsi les points d'image opaques dans l'au moins une zone prédéterminée (36),
**caractérisé en ce que**
le dispositif de commande (18) est aussi conçu pour, après l'ouverture de l'au moins une zone prédéterminée (36), détecter une direction du regard de l'utilisateur (24) et, en fonction de la direction du regard, déplacer l'au moins une zone prédéterminée (36) à l'intérieur de la surface de protection visuelle.

6. Véhicule automobile (10) avec un dispositif de vitre (12) selon la revendication 5.

7. Véhicule automobile (10) selon la revendication 6,
**caractérisé en ce que**
le dispositif de vitre (12) comporte un autre dispositif de détection qui est dirigé vers un environnement du véhicule automobile (10), le dispositif de commande (18) étant conçu pour associer un point fixé par l'utilisateur (24) avec les yeux, à travers l'au moins une zone prédéterminée (36) et dans l'environnement du véhicule automobile (10), à un point d'image détecté par l'autre dispositif de détection et pour déplacer l'au moins une zone prédéterminée (36) à l'intérieur de la surface de protection visuelle de telle sorte que, lors d'un déplacement du véhicule automobile (10), le point fixé par l'utilisateur (24) peut continuer à être fixé par l'utilisateur (24) à travers l'au moins une zone prédéterminée (36).
